# EUROPÄISCHE PATENTSCHRIFT

(11) **EP 1 569 948 B1**
(45) Veröffentlichungstag und Bekanntmachung des Hinweises auf die Patenterteilung: **20.09.2006**
(21) Anmeldenummer: 03812580.3
(22) Anmeldetag: 24.10.2003
(51) Int. Cl.: C07F 19/00, C07F 15/00, C07F 15/04, B01J 31/00, C07B 61/00

(54) **VERFAHREN ZUR HERSTELLUNG VON METALLKOMPLEXEN**
METHOD FOR THE PRODUCTION OF METAL COMPLEXES
PROCEDE POUR PRODUIRE DES COMPLEXES METALLIQUES

(30) Priorität: 12.12.2002 DE 10257938
(43) Veröffentlichungstag der Anmeldung: 07.09.2005
(73) Patentinhaber: Oxeno Olefinchemie GmbH, 45772 Marl (DE)
(72) Erfinder: RÖTTGER, Dirk, 45657 Recklinghausen (DE); JACKSTELL, Ralf, 27472 Cuxhaven (DE); BELLER, Matthias, 18211 Nienhagen (DE)
(74) Vertreter: Lang, Arne
(86) Internationale Anmeldenummer: PCT/EP2003/011773
(87) Internationale Veröffentlichungsnummer: WO 2004/052896

(56) Entgegenhaltungen:
- DE-A- 10 062 577
- JACKSTELL, RALF ET AL: "Efficient telomerization of 1,3-butadiene with alcohols in the presence o in situ generated palladium(0)carbene complexes" JOURNAL OF MOLECULAR CATALYSIS A: CHEMICAL (2002), 185(1-2), 105-112 , 2002, XP002268559
- JACKSTELL, RALF ET AL: "A highly efficient catalyst for the telomerization of 1,3-dienes with alcohols: First synthesis of a monocarbenepalladium(0)-olefin complex" ANGEWANDTE CHEMIE, INTERNATIONAL EDITION (2002), 41(6), 986-989 , 2002, XP002268560

## Beschreibung

Die Erfindung betrifft ein Verfahren zur Herstellung von Carbenliganden enthaltenden Metallkomplexen durch Umsetzung von Metallverbindungen mit Ligandprecursom II und/oder III und den Einsatz der so erhaltenen Metallkomplexe als Katalysatoren.

Metallkomplexe, die als Zentralatom ein Metall der 6. bis 10. Gruppe des Periodensystems der Elemente enthalten und an dieses Metallatom gebundene Liganden aufweisen, werden zunehmend als Katalysatoren für chemische Umsetzungen eingesetzt. Ihre Bedeutung liegt insbesondere bei Reaktionen, die zum Aufbau von Kohlenstoff-Kohlenstoff, Kohlenstoff-Wasserstoff, Kohlenstoff-Sauerstoff und Kohlenstoff-Stickstoff Bindungen führen. Oftmals werden in technischen Prozessen Metall-Komplex-Katalysatoren eingesetzt. Beispiele für derartige Prozesse sind die Hydroformylierung von Olefinen, die Hydrierung, beispielsweise von Olefinen, Aldehyden oder Ketonen, Metathesereaktionen und die Telomerisation.

Die Liganden, die an das Metallatom koordinieren, haben dabei einen immensen Einfluss auf das katalytische Verhalten des Metallkomplexes. Zum einen üben sie eine stabilisierende Wirkung aus, weshalb sie bei katalytischen Umsetzungen oftmals auch im Überschuss zugesetzt werden. Andererseits sind über die Art der Liganden Aktivität und Selektivität des Katalysators in einem weiten Rahmen steuerbar.

Als Liganden werden hauptsächlich Stickstoffverbindungen, beispielsweise Amine, oder Phosphor(III)verbindungen, beispielsweise Phosphine oder Phosphite, eingesetzt. Für die Telomerisation von 1,3-Butadien mit Methanol, bei der hauptsächlich 2,7-Octadienylmethylether entsteht, wird beispielsweise in EP 0 461 222 Triphenylphosphin als Ligand und Palladium als Metall der Gruppen 6-10 beschrieben.

In letzter Zeit finden zudem zunehmend N-heterocyclische Carbene Verwendung als Liganden in Metallkomplexen. Durch Einsatz dieser Liganden lassen sich zum Teil erhebliche Vorteile gegenüber Katalysatoren erzielen, die nur Phosphorliganden enthalten. Diverse Einsatzmöglichkeiten und Beispiele für den Einsatz der N-heterocyclischen Carbene als Liganden finden sich in Übersichtsarbeiten, die den aktuellen Stand der Technik dokumentieren (W.A. Herrmann, Angewandte Chemie 2002, 114, 1342-1363; W.A. Herrmann, T. Weskamp, V.P.W. Böhm, Advances in Organometallich Chemistry, 2001, Vol. 48, Seite 1-69; L. Jafarpour, S.P. Nolan, *Adv. Organomet. Chem.* 2001, 46, 181; D. Bourissou, O. Guerret, F.P. Gabbai, G. Bertrand, Chem. Rev. 100, 39).

Der Einsatz eines N-Heterocyclischen Carbens als Ligand in einem Palladiumkomplex, der als Katalysator für die Telomerisation von 1,3-Butadien mit Methanol eingesetzt wird, wird ebenfalls beschrieben (R. Jackstell, M. Gómez Andreu, A. Frisch, K. Selvakumar, A. Zapf, H. Klein, A. Spannenberg, D. Röttger, O. Briel, R. Karch, M. Beller, Angewandte Chemie 2002, 114, 128). Auch hier lassen sich deutliche Verbesserungen gegenüber Katalysatorsystemen mit Phosphorliganden nachweisen. R. Jackstell, et al. beschreiben in Journal of Molecular Catalysis A: Chemical 185, 105-112, 2002, die Herstellung von Palladium-Carben-Komplexen ausgehend von Imidazolium-Salzen.

Die Erfolge, die mit den N-heterocyclischen Carbenen als Liganden erzielt wurden, zeigen, dass man mit neuen Metallkomplexen als Katalysatoren individuelle katalytische Probleme lösen kann. Zugleich ist es notwendig, dass Metallkomplexe, die als Katalysatoren eingesetzt werden, einfach und kostengünstig erhältlich sind.

Aufgabe der vorliegenden Erfindung war es daher, ein Verfahren zur Herstellung der Metallkomplexe bereitzustellen.

Gegenstand der vorliegenden Erfindung ist daher ein Verfahren zur Herstellung von Komplexen von Metallen der 6. bis 10 Gruppe des Periodensystems der Elemente durch Umsetzen einer Verbindung eines Metalls der 6. bis 10 Gruppe des Periodensystems der Elemente mit Verbindungen der Formel II und/oder III 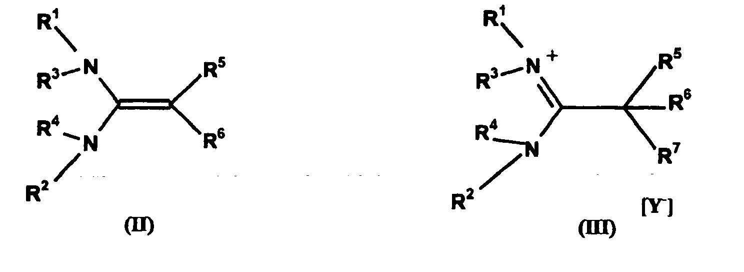 wobei
- R¹, R², R³, R⁴: gleich oder verschieden, für lineare, verzweigte, substituierte oder unsubstituierte cyclische oder alicyclische Alkylgruppen mit 1 bis 24 Kohlenstoffatomen; substituierte oder unsubstituierte, mono- oder polycyclische Arylgruppen mit 6 bis 24 Kohlenstoffatomen; mono- oder polycyclische, substituierte oder unsubstituierte Heterocyclen mit 2 bis 24 Kohlenstoffatomen; ein Heteroatom aus der Gruppe N, O, S stehen und R³, R⁴ eine kovalente Bindung aufweisen können R⁵, R⁶, R⁷ gleich oder verschieden für H, lineare, verzweigte, substituierte oder unsubstituierte cyclische oder alicyclische Alkylgruppen mit 1 bis 24 Kohlenstoffatomen; substituierte oder unsubstituierte, mono- oder polycyclische Arylgruppen mit 6 bis 24 Kohlenstoffatomen stehen können, mit der Maßgabe, dass einer der Substituenten R⁷ nicht für H steht.

Sind die verwendeten Ligandprecursoren ionische Verbindungen, so werden diese als Salz mit dem Gegenion [Y⁻] eingesetzt.

[Y⁻] steht bevorzugt für Halogenid, Pseudohalogenid, Tetraphenylborat, Tetrafluoroborat, Tetrachloroborat, Hexafluorophosphat, Hexafluoroantimonat, Tetracarbonylcobaltat, Hexafluoroferrat, Tetrachloroferrat, Tetrachloroaluminat, Triflat, Bistrifluorsulphonylamid, Heptachlorodialuminat, Tetrachloropalladat, Sulfat, Hydrogensulfat, Nitrat, Nitrit, Phosphat, Hydrogenphosphat, Dihydrogenphosphat, Hydroxid, Carbonat, Hydrogencarbonat, Salze von aromatischen oder aliphatischen Carbonsäuren, Salze von aromatischen oder aliphatischen Sulfonsäuren oder Phenolate.

R⁵, R⁶, R⁷ können die genannten Bedeutungen besitzen oder z. B. substituierte oder unsubstituierte Aryl-, Heteroaryl-, Alkyl-, Alkenyl-, Allyl-Gruppe, -CN, -COOH, -COO-Alkyl-, -COO-Aryl-, -OCO-Alkyl-, -OCO-Aryl-, -OCOO-Alkyl-, -OCOO-Aryl-, -CHO, -CO-Alkyl-, -CO-Aryl-, -O-Alkyl-, -O-Aryl-, -NH₂, -NH(Alkyl)-, -N(Alkyl)₂-, -NH(Aryl)-, -N(Aryl)₂-, -F, -Cl, -Br, -I, -OH, -CF₃, -NO₂, -Ferrocenyl, -SO₃H, -PO₃H₂, wobei die Alkylgruppen 1 bis 24, die Alkenyl- und Heteroarylgruppen 2 bis 24 und die Arylgruppen 5 bis 24 Kohlenstoffatome beinhalten, sein.
Bevorzugt werden im erfindungsgemäßen Verfahren Ligandprecursor eingesetzt, die einer der allgemeinen Formeln (**V**) bis (**X**) genügen; 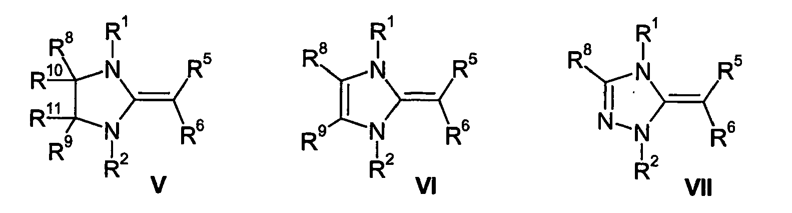 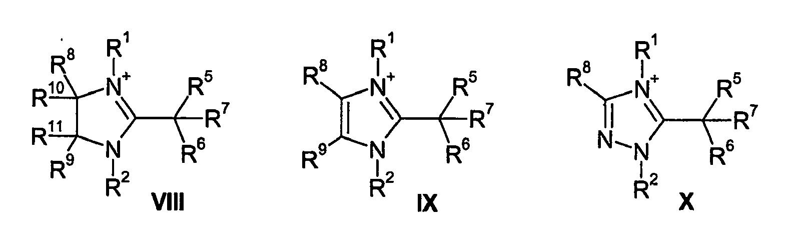 wobei R¹, R², R⁵, R⁶ und R⁷ die genannten Bedeutungen besitzen und R⁸, R⁹, R¹⁰ und R¹¹ gleich oder verschieden sein können und für Wasserstoff stehen oder eine der Bedeutung von R¹ besitzen.
Bevorzugt stehen R⁸, R⁹, R¹⁰, R¹¹ gleich oder verschieden für Wasserstoff, substituierte oder unsubstituierter Aryl-, Heteroaryl-, Alkyl-, Alkenyl-, Allyl-Gruppe, -CN, -COOH, -COO-Alkyl-, -COO-Aryl-, -OCO-Alkyl-, -OCO-Aryl-, -OCOO-Alkyl-, -OCOO-Aryl-, -CHO, -CO-Alkyl-, -CO-Aryl-, -O-Alkyl-, -O-Aryl-, -NH₂, -NH(Alkyl)-, -N(Aryl)₂-, -NH(Aryl)-, -N(Alkyl)₂-, -F, -Cl, -Br, -I, -OH, -CF₃, -NO₂, -Ferrocenyl, -SO₃H, -PO₃H₂, wobei die Alkylgruppen 1 bis 24, die Alkenyl- und Heteroarylgruppen 2 bis 24 und die Arylgruppen 5 bis 24 Kohlenstoffatome beinhalten und wobei die Reste R⁸ und R⁹ auch kovalent verknüpft sein können.

Die Reste R¹, R², R³, R⁴, R⁵, R⁶, R⁷, R⁸, R⁹, R¹⁰, R¹¹ können gleich oder verschieden sein und mindestens einen Substituenten aus der Gruppe -H, -CN, -COOH, -COO-Alkyl, -COO-Aryl, -OCO-Alkyl, -OCO-Aryl, -OCOO-Alkyl, -OCOO-Aryl, -CHO, -CO-Alkyl, -CO-Aryl, -Aryl, - Heteroaryl, -Alkyl, -Alkenyl, -Allyl, -O-Alkyl, -O-Aryl, -NH₂, -NH(Alkyl), -N(Alkyl)₂, -NH(Aryl), -N(Alkyl)₂, -F, -Cl, -Br, -I, -OH, -CF₃, -NO₂, -Ferrocenyl, -SO₃H, -PO₃H₂ aufweisen, wobei die Alkylgruppen 1 bis 24, die Alkenyl- und Heteroarylgruppen 2 bis 24 und die Arylgruppen 5 bis 24 Kohlenstoffatome beinhalten.
Substituenten mit aciden Wasserstoffatomen können an Stelle der Protonen auch Metall- oder Ammoniumionen aufweisen.

R¹ und R² können jeweils gleich oder verschieden sein und stehen insbesondere für Isopropyl, tert.-Butyl, Adamantyl, Cyclohexyl, Benzyl, Phenyl, substituierte Phenylreste (beispielsweise Mesityl, Tolyl, Xylyl, 2,6-Diisopropylphenyl, p-Methoxyphenyl, 2,3-Dimethoxyphenyl, p-Chlorphenyl und mono- oder polycyclische Ringe, die mindestens ein Heteroatom enthalten).

Dies sind beispielsweise Reste, die sich von fünf- und sechsgliedrigen Heteroalkanen, Heteroalkenen und Heteroaromaten wie 1,4-Dioxan, Morpholin, y-Pyran, Pyridin, Pyrimidin, Pyrazin, Pyrrol, Furan, Thiophen, Pyrazol, Imidazol, Thiazol und Oxazol ableiten.

R⁸, R⁹, R¹⁰ und R¹¹ können jeweils gleich oder verschieden sein und stehen insbesondere für Wasserstoff, Methyl, Ethyl, Phenyl.

In den allgemeinen Formeln **(VI)** und **(IX)** stehen die Reste R⁸ und R⁹ zudem gemeinsam für eine verbrückende Gruppe, in der die Substituenten über eine kovalente Bindung miteinander verknüpft sind, insbesondere für Gruppen wie -CH=CH-CH=CH-, die zur Ausbildung eines annelierten Aromaten führen, der gegebenenfalls mit den genannten Substituenten einfach oder mehrfach substituiert sein kann.

R⁵, R⁶, R⁷ können jeweils gleich oder verschieden sein und stehen insbesondere für Wasserstoff, Aryl-, Heteroaryl- oder Alkenylsubstituenten. Bevorzugt steht einer der Reste R⁵ oder R⁶ für Wasserstoff, der andere für einen Aryl-, Heteroaryl- oder Alkenylsubstituenten. Bevorzugte Arylsubstituenten sind substituierte oder unsubstituierte Phenylgruppen, bevorzugte Heteroarylsubstituenten sind substituierte oder unsubstituierte Pyridylgruppen.

Die Reste R⁵ und R⁶ stehen zudem gemeinsam für eine verbrückende Gruppe, in der die Substituenten über eine kovalente Bindung miteinander verknüpft sind. Bevorzugt bildet sich dabei ein fünf, sechs, siebengliedriger Ring aus.

Die Reste R¹ und R⁵ können zudem gemeinsam für eine verbrückende Gruppe, in der die Substituenten über eine kovalente Bindung miteinander verknüpft sind, stehen. Bevorzugt bildet sich dabei, zusammen mit der N-C=C-Einheit der Verbindungen III bis VIII, ein fünf-, sechs-, sieben-, acht-, neun- oder zehngliedriger Ring aus. Wenn beispielsweise die Reste R¹ und R⁷ gemeinsam für die Gruppe -CH₂-CH₂-CH₂- stehen, bildet sich ein sechsgliedriger Zyklus.

Im erfindungsgemäßen Verfahren werden keine Verbindungen der Formen II und/oder III eingesetzt, bei denen die Reste R³ und R⁴ sowie R⁵ und R⁶ gleichzeitig zwei Stockstoffatome enthalten und verbrückt sind.

Es sind somit alle Tetraaminoethylenderivate der allgemeinen Formel 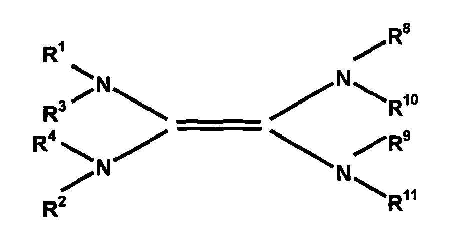 nicht Gegenstand des erfindungsgemäßen Verfahrens.

In der nachfolgenden Tabelle sind Beispiele für erfindungsgemäß eingesetzte Ligandprecursoren wiedergegeben.

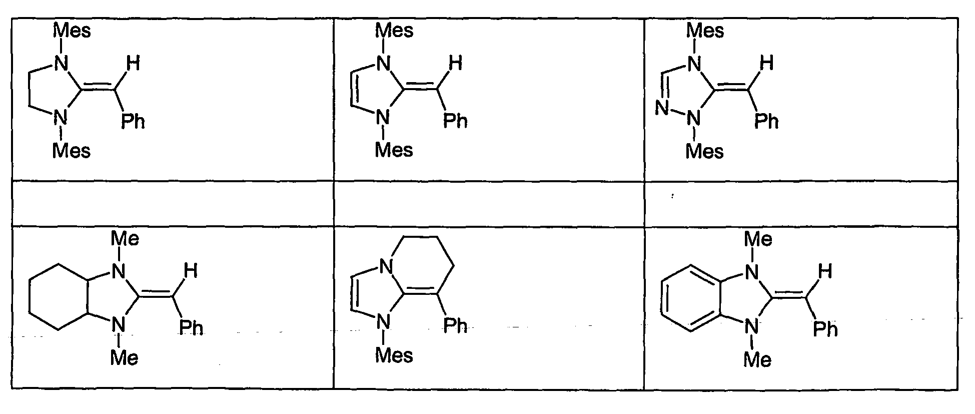

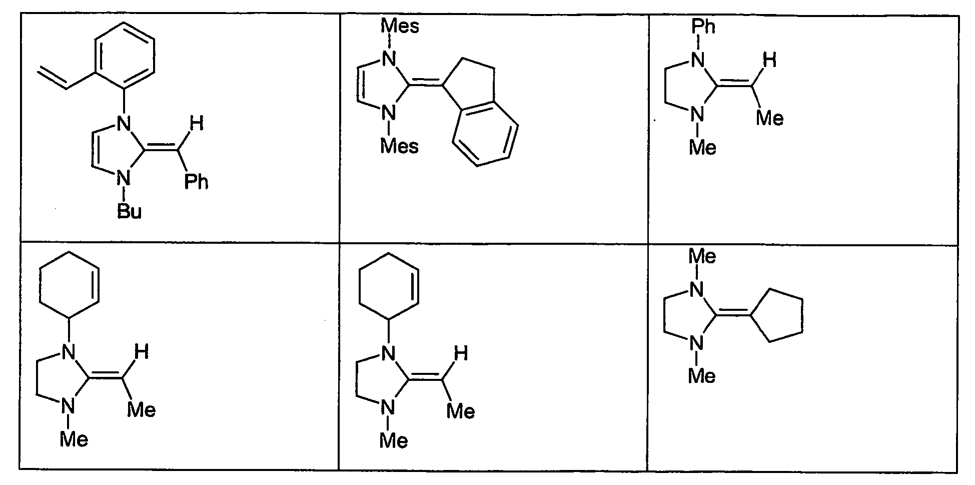

Die Ligandprecursoren nach den allgemeinen Formeln (**II**) bis (**X**) können synthetisch einfach auf verschiedenen Wegen hergestellt werden. Die Verbindungen (**V**) bis (**VII)** können beispielsweise literaturbekannt durch Deprotonierung der Salze (**VIII**) bis (**X**) erhalten werden, in denen R⁷ für Wasserstoff steht (Liebigs Ann. Chem. 1993, 1149-1151; Chem. Ber. 1987, 120,2053).

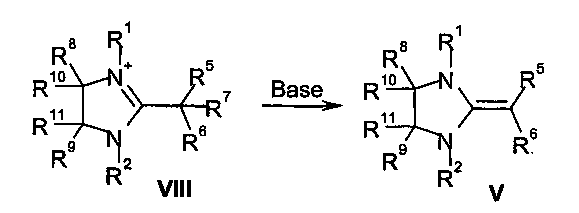

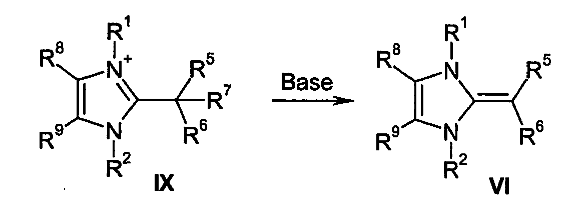

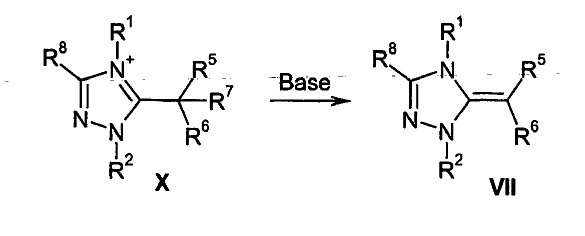

Für die Verbindungen (**VIII**) bis (**X**) sehen ebenfalls unterschiedliche Synthesewege offen, beispielhaft werden hier vier illustriert.

### Syntheseweg 1)

Aus Imidazoliumsalzen können durch Deprotonierung und anschließende Reaktion mit Alkylhalogeniden Verbindungen nach der allgemeinen Formel **IX** erhalten werden (vgl. Tetrahedron 1988,44, 7413).

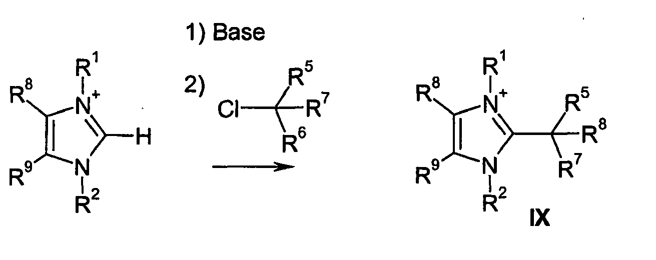

### Syntheseweg 2)

Thiolatgruppen in 2-Position von Imidazoliumsalzen können über nucleophile Substitutionsreaktionen ausgetauscht werden (Liebigs Ann. Chem. 1993, 1149-1151).

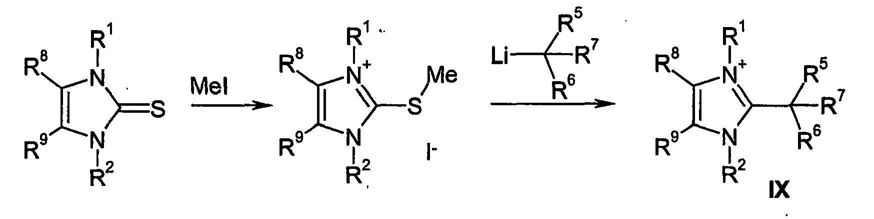

### Syntheseweg 3)

Imidazoliumsalze der allgemeinen Formel **(IX**) sind über Aufbaureaktionen aus α-Dicarbonylverbindungen, primären Aminen und Aldehyd zugänglich (WO 91/14678).

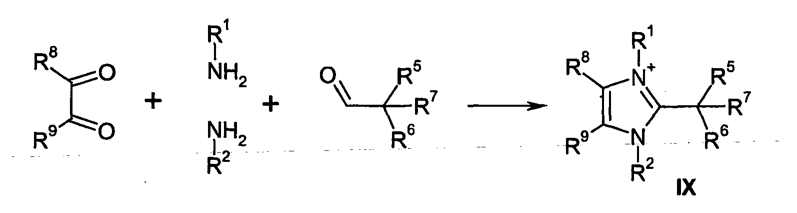

Anstatt einer einstufigen Synthese kann man auch zuerst aus der α-Dicarbonylverbindung und dem Amin ein 1,4-Diazabutadienen herstellen und dies mit Aldehyd umsetzen.

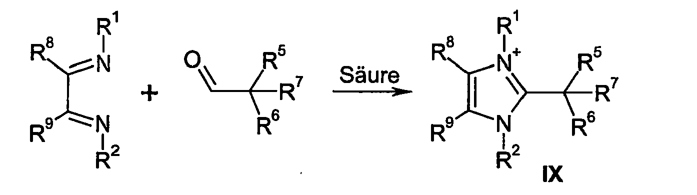

Durch Umsetzung von 1,2-Diaminen mit Orthoestern sind die Verbindungen des Typs (**VIII**) zugänglich. Als Alternative zu den Orthoestern können ggf. Nitrile eingesetzt werden (J. Med. Chem. 1977, 20, 531).

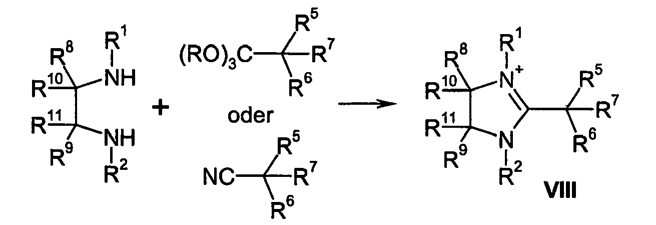

### Syntheseweg 4)

Synthese durch Quarternierung des Stickstoffatoms in substituierten Imdiazolen, beispielsweise unter Einsatz von Alkylhalogeniden als Alkylierungsmittel.

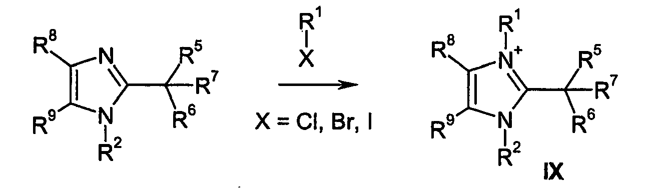

Über das erfindungsgemäße Verfahren werden N-heterocyclische Liganden in Metallkomplexe eingeführt. Dies kann unter Erweiterung der Ligandensphäre oder unter Verdrängung eines oder mehrerer in der Metallverbindung **(I)** bzw. **(XI)** bereits vorhandener Liganden erfolgen.

Auch kann es mit der Einführung des Carbenliganden zur Einführung von zusätzlichen neuen Liganden, zu einem Ligandenaustausch oder zur Veränderung der Koordinationsweise bereits vorhandener Liganden kommen. Dieses Verhalten ist nicht ungewöhnlich und wird auch bei der Herstellung von Metall-Carbenkomplexen über andere synthetische Zugänge beobachtet, vgl. EP 0 721 953 B1.
N-heterocyclische Carbenliganden werden nach literaturbekannten Verfahren hauptsächlich über drei Routen in Metallkomplexe eingeführt: a) durch Umsetzung von Metallverbindungen mit den freien N-heterocyclischen Carbenen, b) durch in situ Deprotonierung von Ligandvorstufen, wobei die freien Carbene entstehen, c) durch Spaltung von Dimeren der Carbene (W.A. Herrmann, T. Weskamp, V.P.W. Böhm, Advances in Organometallic Chemistry, 2001, Vol. 48, Seite 1-69). Die freien N-heterocyclischen Carbene sind oftmals nur begrenzt stabil oder können nur in Lösung gehandhabt werden.

Durch das erfindungsgemäße Verfahren wird ein neuer Zugang zu den Metallkomplexen eröffnet, der einfach herstellbare und stabile Ligandprecursoren einsetzt. In der Literatur finden sich bislang keine experimentellen Beschreibungen dieser Reaktion. Für die Addition von Imidazoliumsalzen mit Wasserstoff- oder Halogensubstituenten an Metalle der 10. Gruppe sind Beispiele bekannt. Auch für die Bildung von Verbindungen nach der allgemeinen Formel **IX** mit R⁵ = R⁶ = R⁷ = H aus Metallcarbenkomplexen liegen experimentelle Befunde vor (vgl. J. Am. Chem. Soc. 2001, 123, 8317). Die gleiche Literaturstelle führt zudem Rechnungen zur Addition von 1,2,3-Trimethylimidazoliumsalzen (Formel IX mit R1 = R2 = Methyl, R⁵ = R⁶ = R⁷ = R⁸ = R⁹ = H) an Modell-Komplexe von Metallen der Gruppe 10 in der Oxidationsstufe 0 an, ohne diese aber mit experimentelle Arbeiten hinterlegen zu können.

WO 02/34722 offenbart an 1,2,3-Position substituierte Imidazoliumsalze als Ionische Flüssigkeiten und deren Einsatz als Lösungsmittel, besonders für Zweiphasenreaktionen. Der Einsatz als Lösungsmittel wird insbesondere bei Reaktionen bevorzugt, bei denen Metallkomplexe die Reaktion katalysieren. Eine Reaktion der Metallverbindungen mit den Imidazoliumsalzen wird nicht beschrieben oder erwähnt.

Als Metallverbindungen der 6. -10- Gruppe des Periodensystems werden bevorzugt Ru, Rh, Ni, Pd oder Pt eingesetzt. Hier kommen insbesondere Salze oder Komplexverbindungen der Metalle in Frage. Die Verbindungen können anionische, kationische oder neutrale Liganden enthalten. Beispiele für Liganden sind Halogenide, Phosphane, Phosphite, Phosphonite, Phosphinite, Amine, Nitrile, Isonitrile, Kohlenmonoxid, Stickstoffmonoxid, Alkoholate, Carboxylate, Alkyl-, Arylsubstituenten, Alkene, Alkine, über das π-System koordinierende Aromaten wie Benzol, Cyclopentadienyl, Indenyl, Carbenliganden (beispielsweise Fischer-Typ, Schrock-Typ oder heterocyclische Carbenliganden).
Bevorzugt werden Salze oder Komplexe, die einfach zugänglich sind und oftmals kommerziell erhältlich sind, beispielsweise Metallhalogenide, Metallacetate, Metallacetylacetonate, Metallcarbonyle.

### Als Metallverbindung sind beispielsweise geeignet:

Palladiumverbindungen:
   Palladium(II)acetat, Palladium(II)chlorid, Palladium(II)bromid, Lithiumtetrachloropalladat, Palladium(II)acetylacetonat, Palladium(0)-dibenzylidenaceton-Komplexe, Palladium(II)propionat, Bis(acetonitril)palladium(II)chlorid, Bis(triphenylphosphan)palladium(II)dichlorid, Bis(benzonitril)palladium(II)chlorid, Bis(tri-o-tolylphosphin)palladium(0), Allylpalladiumchlorid (dimer), Bis(tricyclohexylphosphin)palladium(0).
Platinverbindungen:
   Dichloro(1,5-cyclopentadien)platin(II), Dichlorobis(benzonitril)platin(II), Dichlorobis(pyridin)-platin(II), Dichlorodi(ethylene)platin(II) dimer, Platin(II)acetylacetonat, Platin(II)chlorid, Platin(IV)chlorid, Tetrakis(triphenylphosphin)platin(0), Chloroplatinsäure, Kaliumhexachloroplatinat(IV), Natriumhexachloroplatinat(IV).
Rutheniumverbindungen:
   Dichloro(benzen)ruthenium(II) dimer, Dichloro(cymene)ruthenium(II) dimer, Dichlorotris(triphenylphosphin)ruthenium(II), Dichloro(1,5-cyclooctadien)ruthenium(II), Rutheniumcarbonyle, Rutheniumchloride, Ruthenium(III)acetylacetonat.
Nickelverbindungen:
   Bis(1,5-cyclopentadien)nickel(0), Bis(triphenylphosphin)nickel(II)chlorid, Bis(triphenylphosphin)nickeldicarbonyl, Nickeltetracarbonyl, Nickel(II)acetat, Nickel(II)acetylacetonat, Nickel(II)chlorid, Nickel(II)(2-ethylhexanoat), Nickel(II)sulfat, Nickel(II)nitrat.
Rhodiumverbindungen:
   Rhodiumcarbonyle wie Tetrarhodiumdodekacarbonyl, Hexarhodiumhexadekacarbonyl; Rhodiumdicarbonylacetylacetonat, Rhodiumnitrat, Rhodiumchlorid, Rh(CO)₂(acac) (acac = Acetylacetonat), Rhodiumformiat, Rhodiumacetat, Rhodiumoctanoat, Rhodiumnonanoat, µ,µ'-Dichlororhodiumtetracarbonyl, [Rh(OAc)(COD)]₂ (Ac = Acetylgruppe, COD = 1,5-Cyclooctadien), Tris(triphenylphosphin)rhodiumchlorid.

Im erfindungsgemäßen Verfahren werden bevorzugt Komplexe der allgemeinen Formel (I) 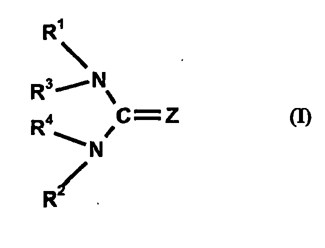 hergestellt, wobei [Z] für ein Metallkomplexfragment der allgemeinen Formel

[LₐM_{b}][A]ₙ (XI)

steht, und
- M:: Metalle der Gruppen 6 bis 10 des Periodensystems der Elemente
- L:: ein oder mehrere, gleiche oder verschiedene ein oder mehrzähnige geladene oder ungeladene Liganden
- A:: einfach gelandenes Anion oder das chemische Äquivalent eines mehrfach geladenen Anions,
- b:: ganze Zahl von 1 bis 3
- a:: ganze Zahl von 0 bis 5 x b
- n:: ganze Zahl von 0 bis 6
bedeutet und R¹, R², R³, R⁴ die genannten Bedeutungen besitzen.

Ein oder mehrzähnige Liganden, die im Metallkomplexfragment L neben dem erfindungsgemäß eingeführten Carbenligand vorhanden sein können, sind in der allgemeinen Formel (**XI**) mit L widergegeben.

L steht für Wasserstoff, das Wasserstoff-Ion, Halogene, Halogen-Ionen, Pseudohalogenide, Carboxylat-Ionen, Sulfonat-Ionen, Amidreste, Alkylgruppen, Alkylarylgruppen, Arylgruppen, Heteroarylgruppen, Alkenylgruppen, Alkoholatreste, Nitrile, Isonitrile, Mono- oder Diolefine, Alkine, π-Aromatenreste, Cyclopentadienyl, Indenyl, Phosphine, Phosphite, Phosphinite, Phosphonite, Phosphoraromaten, Acetylacetonat, Kohlenmonoxid, Stickstoffmonoxid oder Carbenliganden, wobei die Alkylgruppen 1 bis 24, die Alkenyl- und Heteroarylgruppen 2 bis 24 und die Arylgruppen 5 bis 24 Kohlenstoffatome beinhalten und jeweils substituiert oder unsubstituiert sein können.
Sind mehre Liganden L vorhanden, so können sie gleich oder verschieden sein.

A steht in den der allgemeinen Formel (**XI**) für Halogenid, Pseudohalogenid, Tetraphenylborat, Tetrafluoroborat, Tetrachloroborat, Hexafluorophosphat, Hexafluoroantimonat, Tetracarbonylcobaltat, Hexafluoroferrat, Tetrachloroferrat, Tetrachloroaluminat, Triflat, Bistrifluorsulphonylamid, Heptachlorodialuminat, Tetrachloropalladat, Sulfat, Hydrogensulfat, Nitrat, Nitrit, Phosphat, Hydrogenphosphat, Dihydrogenphosphat, Hydroxid, Carbonat, Hydrogencarbonat, Salze von aromarischen oder aliphatischen Carbonsäuren, Salze von aromarischen oder aliphatischen Sulfonsäuren und Phenolate.

Bevorzugt sind Metallkomplexfragmente nach der allgemeinen Formel **(XI),** in denen b gleich eins ist.

Für die Herstellung der Metallkomplexe **(I)** ist eine stöchiometrische Menge an Ligandenprecursor nach den allgemeinen Formeln **(III)** bis **(X)** notwendig. Oftmals werden jedoch bei Einsatz einer überstöchiometrischen Mengen an Ligandenprecursor bessere Ausbeuten der Verbindungen (I) erhalten. Typischer Weise beträgt daher das molare Verhältnis von Ligandprecursor zu Metallverbindung 100 : 1 bis 1: 1, bevorzugt 10 : 1 bis 1:1.

Das erfindungsgemäße Verfahren zur Herstellung von Metallkomplexen der Formel (I) wird bevorzugt in Gegenwart von Lösungsmittel durchgeführt. Geeignete Lösemittel sind unter anderem aliphatische; cycloaliphatische und aromatische Kohlenwasserstoffe wie zum Beispiel C₃-C₂₀-Alkane, Mischungen niederer Alkane (C₃-C₂₀), Cyclohexan, Cyclooctan, Ethylcyclohexan, Alkene und Polyene, Vinylcyclohexen, 1,3,7-Octatrien, die C₄₋Kohlenwasserstoffe aus Crack-C₄-Schnitten, Benzol, Toluol und Xylol; polare Lösemittel wie zum Beispiel primäre, sekundäre und tertiäre Alkohole, Di- und Polyole (Ethylenglycol, Diethylenglycol, Triethylenglycol, Tetraethylenglycol, Polyethylenglycol, Glycerin), primäre, sekundäre und tertiäre Amine, Ammoniak, Amide wie zum Beispiel Acetamid, Dimethylacetamid und Dimethylformamid, Nitrile wie zum Beispiel Acetonitril und Benzonitril, Ketone wie zum Beispiel Aceton, Methylisobutylketon und Diethylketon; Carbonsäureester wie zum Beispiel Essigsäureethylester, Ether wie beispielsweise Dipropylether, MTBE, Diethylether, Dimethylether, Methyloctylether, 3-Methoxyoctan, 1-Methoxy-2,7-octadien, 3-Methoxy-1,7-octadien, Dioxan, Tetrahydrofuran, Anisol, Alkyl- und Arylether von Ethylenglycol, Diethylenglycol, Triethylenglycol, Tetraethylenglycol und Polyethylenglycol und andere polare Lösemittel wie zum Beispiel Sulfolan, Dimethylsulfoxid, Ethylencarbonat, Propylencarbonat und Wasser. Auch Ionische Flüssigkeiten, beispielsweise Imidazolium oder Pyridiniumsalze, können als Lösemittel eingesetzt werden.

Die Lösemittel kommen allein oder als Mischungen verschiedener Lösemittel zum Einsatz.

Die Metallkomplexe **(I)** werden bevorzugt als Katalysatoren eingesetzt. Eine bevorzugte Ausführungsform des erfindungsgemäßen Verfahrens ist es, die Metallkomplexe **(I)** in situ als Katalysator oder Katalysatorvorstufe zu generieren. In diesem Fall werden als Lösungsmittel bevorzugt unter den Reaktionsbedingungen flüssig vorliegende Reaktanden genutzt, die in der Katalyse umgesetzt werden. Dabei kann es sich beispielsweise um Olefine, Halogenide oder Alkohole handeln. Diese können wiederum in Mischungen mit den schon genannten geeigneten Lösungsmitteln eingesetzt werden.

Die Temperatur, bei der die Metallkomplexe (**I**) hergestellt werden, beträgt -135°C bis 200°C, bevorzugt -78°C bis 160°C. Der Druck, bei dem die Metallkomplexe (**I**) hergestellt werden, beträgt 1 bis 125 bar.
Die erfindungsgemäße Herstellung der Metallkomplexe (**I**) kann in Gegenwart von Verbindungen erfolgen, die als Liganden an Metallzentren koordinieren können. Hierzu zählen zur Koordination befähigte Lösungsmittel wie Tetrahydrofuran oder Acetonitril und Verbindungen, die bekannt als Liganden für Metalle geeignet sind. Hierzu gehören beispielsweise Phosphor(III)verbindungen wie Phosphine, Phosphite, Phosphinite, Phosphinite, Phosphabenzene, Nitrile, Isonitrile, Alkene, Alkine, Diene, Halogenide, Amine.

Zur Herstellung der Metallkomplexe (I) nach dem erfindungsgemäßen Verfahren können der Reaktion Oxidations- oder Reduktionsmittel zugesetzt werden. Durch die Zugabe von Oxidations- oder Reduktionsmitteln kann eine, gegebenenfalls zusätzliche, Änderung der Oxidationsstufe des Metall forciert werden. Beispiele für Oxidations- und Reduktionsmittel sind Hydrazin, Wasserstoffperoxid, Ameisensäure, Wasserstoff, Sauerstoff, Luft, Stanane, Silane, Alkohole, Ionische Hydride oder Amine.

Die Herstellung der Metallkomplexe (**I**) erfolgt, abhängig vom jeweiligen System, unter sauren, neutralen oder basischen Bedingungen. Diese Bedingungen können durch Zugabe von Säuren, Basen oder Puffern entsprechend eingestellt werden. Als Säuren kommen beispielsweise Mineralsäuren (Schwefelsäure, Salzsäure, Phosphorsäure), Carbonsäuren (Ameisensäure, Essigsäure, Benzoesäure), Sulfonsäuren oder Phenole zum Einsatz. Typische Basen sind beispielsweise Alkali- und Erdalkalimetallhydroxide (Natriumhydroxid, Calciumhydroxid), Alkali- und Erdalkalimetallcarbonate (Natriumcarbonat, Cäsiumcarbonat), Amine, Alkoholate und Phenolate (Natriummethylat, Kalium-t-butylat, Natriumphenolat), Alkali- und Erdalkalimetallhydride (Natriumhydrid) und Alkyl- oder Aryl-Metallverbindungen wie Butyllithium, Butylmagnesiumchlorid, Phenyllithium.

Die erfindungsgemäß hergestellten Metallkomplexe können in Substanz isoliert und als Katalysator verwendet oder in situ erzeugt und direkt als Katalysator oder Präkatalysator eingesetzt werden. Als Präkatalysator wird allgemein und im Rahmen dieser Erfindung eine Substanz, hier ein Metallkomplex, verstanden, aus dem sich unter Katalysebedingungen die aktiven Katalysatorspezies bilden. Dies kann beispielsweise unter Abspaltung eines oder mehrerer der vorhandenen Liganden (beispielsweise L in (**XI**)) und Koordination des Substrats erfolgen.
Beispiele für Katalysereaktionen, in denen die erfindungsgemäß hergestellten Metallkomplexe (I) eingesetzt werden können, sind Hydroformylierung, Hydrierung, Arylaminierungen, Hydrosilylierung, Kohlenstoff-Kohlenstoff-Kupplungsreaktionen (zum Beispiel Heck-Reaktion, Suzuki-Kupplung, Kumada-Kupplung, Stille-Kupplung, Miyaura-Kupplung, die Sonogashira-Kupplung), Olefinmetathese, Olefindimerisierung, Olefinoligomerisierung, Cyclopropanierung, Reduktion von Halogenarenen und die Polymerisation (Homo- und Copolymerisation). Es ist möglich, das erfindungsgemäße Verfahren so durchzuführen, dass die Bildung der Metallkomplexe (I) in situ als Katalysator oder Präkatalysator in den o. g. Reaktionen erfolgt.
Gegenstand der vorliegenden Erfindung sind daher auch die o. g. Verfahren, die in Gegenwart der Metallkomplexe (**I**), der erfindungsgemäß hergestellten Metallkomplexe (**I**) bzw. der Verbindungen II bis X als Ligandprecursoren durchgeführt werden.

Bevorzugte Katalysereaktionen, in denen die erfindungsgemäß, in situ oder in Substanz, hergestellten Metallkomplexe (**I**) als Katalysator oder Präkatalysator eingesetzt werden, sind katalytische Umsetzungen von Olefinen oder Dienen zu Olefinen oder Dienen mit veränderter Kohlenstoffzahl, insbesondere die Methathese von Olefinen und die Telomerisation von nichtcyclischen, konjugierten Dienen wie Butadien, mit Alkoholen, Wasser oder Aminen.

Das molare Verhältnis einer oder mehrerer der Verbindungen II bis X zum Metall der 6. - 10. Gruppe des Periodensystems beträgt 1 : 100, insbesondere 1 : 10.

Die Temperatur, bei der Katalysereaktionen mit den nach dem erfindungsgemäßen Verfahren hergestellten Komplexen durchgeführt werden, hier insbesondere die Telomerisation von Butadien mit Methanol liegt im Bereich zwischen -78°C und 200°C, bevorzugt zwischen 20°C und 160°C. Bevorzugt werden 0.00001 Mol% bis 5 Mol% an Metallverbindung (I) bezogen auf das umzusetzende Substrat eingesetzt, besonders bevorzugt Mengen zwischen 0.0001 Mol% bis 1 Mol%.
Je nach Erfordernis können der Katalysereaktion Säuren oder Basen zugesetzt werden. Zudem können neben dem Metallkomplex (**I**) weitere Liganden oder Ligandenprecursoren anwesend sein. Bevorzugt werden als zusätzliche Liganden Phosphor(III)verbindungen wie Phosphine, Phosphite, Phosphinite, Phosphinite und Verbindungen nach den allgemeinen Formeln (**II**) bis (**X**) eingesetzt. Das molare Verhältnis von überschüssigem Ligand zum Metallkomplex (**I**) beträgt dabei 500 : 1 bis 0 : 1, bevorzugt 100 : 1 bis 0 : 1, besonders bevorzugt 50 : 1 bis 0 : 1 je Ligand.

Die Katalysereaktionen unter Einsatz der nach dem erfindungsgemäßen Verfahren hergestellten Metallkomplexe können als kontinuierlich oder als diskontinuierliche arbeitende Verfahren durchgeführt werden. Verfahren zur Durchführung katalytischer Reaktionen sind in der Literatur beschrieben und dem Fachmann hinreichend bekannt.
Optional kann das erfindungsgemäße Verfahren während der durch den Komplex **(I)** zu katalysierenden Reaktion durchgeführt werden.

Es ist daher möglich, dass die Metallkomplexe (I) in situ aus den Verbindungen II bis X und einem der genannten Metalle als Katalysatoren in Hydroformylierungen, Hydrierungen, Arylaminierungen, Hydrosilylierungen, Heck-Reaktionen, Suzuki-Kupplungen, Kumada-Kupplungen, Stille-Kupplungen, Miyaura-Kupplungen, Sonogashira-Kupplungen, Olefinmetathesen, Olefindimerisierung, Olefinoligomerisierungen, Cyclopropanierungen, Reduktionen von Halogenarenen, Polymerisationen oder Telomerisationsreaktionen hergestellt werden bzw. als Katalysator in diesen Reaktionen verwendet werden können.

In Anlehnung an R. Jackstell, M. Gómez Andreu, A. Frisch, K. Selvakumar, A. Zapf, H. Klein, A. Spannenberg, D. Röttger, O. Briel, R. Karch, M. Beller, Angewandte Chemie 2002, 114, 128 wird im Rahmen dieser Erfindung unter Telomerisation allgemein die Umsetzung von Olefinen mit konjugierten Doppelbindungen (konjugierte Diene) in Gegenwart eines Nucleophils (Telogens) verstanden. Als Hauptprodukte werden dabei Verbindungen erhalten, die sich aus zwei Äquivalenten des Diens und einem Äquivalent des Nucleophils aufbauen. Die Telomerisation von Dienen ist in der Fachliteratur ausführlich beschrieben (WO 91/09822, US 4,642,392, US 4,831,183, DE 2 137 291, US 5 030 792, US 4 334 117, US 4 356 333, US 5 057 631, EP 0 296 550, WO 98/08 794, DE 195 23 335).
Die Produkte der Telomerisationsreaktion haben als vielseitig einsetzbare Vorstufen für Lösemittel, Weichmacher, Feinchemikalien und Wirkstoffvorprodukte technische Bedeutung. Die aus 1,3-Butadien erhältlichen Verbindungen Octadienol, Octadienylether oder Octadienylester sind potentielle Zwischenprodukte in Verfahren zur Darstellung von entsprechenden Alkenen.

Die Telomerisation von Dienen mit Nucleophilen ist eine technisch interessante Methode zur Veredelung von kostengünstigen, industriell verfügbaren Dienen. Von besonderem Interesse ist aufgrund der guten Verfügbarkeit die Verwendung von Butadien, Isopren oder von diese Diene enthaltenden Cracker-Schnitten. Bis dato wird die Telomerisation von 1,3-Butadien jedoch lediglich von der Firma Kuraray im Feinchemikalienbereich zur Synthese von 1-Octanol praktisch angewendet. Gründe, die den breiteren Einsatz von Telomerisationsprozessen verhindern, sind unter anderem mangelnde Katalysatoraktivitäten, Katalysatorproduktivitäten und Selektivitätsprobleme von Telomerisationskatalysatoren. Somit führen die bekannten Telomerisationsprozesse zu hohen Katalysatorkosten und/oder Nebenprodukten, die eine großtechnische Realisierung verhindern.

Hauptsächlich werden Katalysatoren mit Palladium als Zentralatom und Phosphorliganden eingesetzt. Diese Katalysatoren liefern beispielsweise bei der Telomerisation von Butadien mit Methanol generell Gemische der aufgeführten Produkte **1a**, **1b**, **2**, **3**. Hauptprodukte sind dabei die gewünschten technisch wichtigen linearen Telomere **1a** und **1b**. Jedoch entstehen signifikante Anteile des verzweigten Telomers **2** und von 1,3,7-Octatrien **3**.

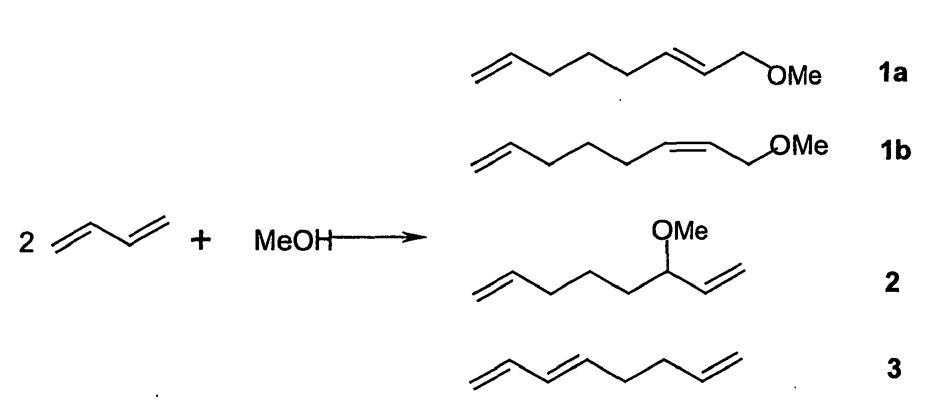

Weiterhin entstehen 4-Vinyl-1-cyclohexen (Diels-Alder-Produkt des Butadiens) in variablen Ausbeuten sowie - in der Regel in nur geringen Mengen - weitere Nebenprodukte. Dieses Spektrum von Produkten findet man generell auch bei Einsatz anderer Nucleophile mit aktiven H-Atomen, wobei an Stelle der Methoxygruppe die entsprechenden Reste des jeweiligen Nucleophils treten.

Die signifikante Bildung der genannten Nebenprodukte ist ein weiterer Grund, der eine Umsetzung eines wirtschaftlichen und umweltfreundlichen Verfahren außerordentlich schwierig macht. So konnten, obwohl die Telomerisation von Butadien mit Methanol bereits von mehreren Firmen intensiv bearbeitet und patentiert wurde, die oben genannten Probleme nicht befriedigend gelöst werden.

Durch Einsatz der erfindungsgemäß hergestellten Komplexe als Katalysatoren oder Katalysatorprecursoren können bei der Telomerisation von nicht cyclischen Olefinen mit mindestens zwei konjugierten Doppelbindungen (**XII**) mit einem Nucleophil (**XIII**) deutliche Verbesserungen der Selektivitäten erzielt werden.

In der Telomerisation gemäß dem erfindungsgemäßen Verfahren können prinzipiell alle nicht cyclischen Olefine mit mindestens zwei konjugierten Doppelbindungen eingesetzt werden. Im Rahmen dieser Erfindung ist der Einsatz von 1,3-Butadien und Isopren (2-Methyl-1,3-butadien) bevorzugt. Dabei können sowohl die reinen Diene als auch Mischungen, die diese Diene enthalten, eingesetzt werden.

Als 1,3-Butadien/Isopren enthaltende Mischungen kommen vorzugsweise Mischungen von 1,3-Butadien oder Isopren mit anderen C₄-Kohlenwasserstoffen und/oder C₅₋Kohlenwasserstoffen zum Einsatz. Solche Mischungen fallen beispielsweise bei Spalt(Crack)-Prozessen zur Produktion von Ethen an, in denen Raffineriegase, Naphtha, Gasöl, LPG (liquified petroleum gas), NGL (natural gas liquid) usw. umgesetzt werden. Die bei diesen Prozessen als Nebenprodukt anfallenden C₄-Schnitte enthalten je nach Crack-Verfahren unterschiedliche Mengen an 1,3-Butadien. Typische 1,3-Butadienkonzentrationen im C₄₋Schnitt, wie sie aus einem Naphtha-Steamcracker erhalten werden, liegen bei 20 - 70 % 1,3-Butadien.
Die C₄-Komponenten n-Butan, i-Butan, 1-Buten, cis-2-Buten, trans-2-Buten und i-Buten, die ebenfalls in diesen Schnitten enthalten sind, stören die Umsetzung im Telomerisationsschritt nicht oder nur unwesentlich.

Alkine, insbesondere Vinylacetylen, können hingegen als Moderatoren in der Telomerisationsreaktion wirken. Es ist daher vorteilhaft, die C4-Alkine und ggf. auch Kummulene wie das 1,2-Butadien vorher zu entfernen (z. B. gemäß DE 195 23 335). Dies kann, falls möglich, über physikalische Verfahren wie Destillation oder Extraktion erfolgen. Auf chemischem Weg können die Alkine über Selektivhydrierungen zu Alkenen oder Alkanen und die kumulierten Diene zu Monoenen reduziert werden. Verfahren für derartige Hydrierungen sind Stand der Technik und zum Beispiel in WO 98/12160, EP-A-0 273 900, DE-A-37 44 086 oder US 4 704 492 beschrieben.

Als Nucleophile (**XIII**) werden bevorzugt eingesetzt
Wasser,
Akohole und Phenole wie zum Beispiel Methanol, Ethanol, n-Propanol, Isopropanol, Allylalkohol, Butanol, Octanol, 2-Ethylhexanol, Isononanol, Benzylalkohol, Cyclohexanol, Cyclopentanol, 2-Methoxyethanol, Phenol oder 2,7-Octadien-1-ol Dialkohole wie zum Beispiel Ethylenglycol, 1,2-Propandiol, 1,3-Propandiol, 1,4-Butandiol, 1,2-Butandiol, 2,3-Butandiol und 1,3-Butandiol
Polyole wie. zum Beispiel Glycerin, Glucose, Saccharose,
Hydroxyverbindungen wie zum Beispiel α-Hydroxyessigsäureester Carbonsäuren wie zum Beispiel Essigsäure, Propansäure, Butansäure, Isobutansäure, Benzoesäure, 1,2-Benzoldicarbonsäure, 1,3-Benzoldicarbonsäure, 1,4-Benzoldicarbonsäure, 1,2,4-Benzoltricarbonsäure, Ammoniak, primäre Amine wie zum Beispiel Methylamin, Ethylamin, Propylamin, Butylamin, Octylamin, 2,7-Octadienylamin, Dodecyclamin, Anilin, Ethylendiamin oder Hexamethylendiamin, sekundäre Amine wie Dimethylamin, Diethylamin, N-Methylanilin, Bis(2,7-Octadienyl)amin, Dicyclohexylamin, Methylcyclohexylamin, Pyrrolidin, Piperidin, Morpholin, Piperazin oder Hexamethylenimin.

Telogene, die selbst über eine Telomerisationsreaktion erhalten werden können, können direkt eingesetzt oder aber in situ gebildet werden. So kann beispielsweise 2,7-Octadien-1-ol aus Wasser und Butadien in Anwesenheit des Telomerisationskatalysators in situ gebildet werden, 2,7-Octadienylamin aus Ammoniak und 1,3-Butadien usw.

Besonders bevorzugt eingesetzte Nucleophile (**XIII**) sind Wasser, Methanol, Ethanol, n-Butanol, Allylalkohol, 2-Methoxyethanol, Phenol, Ethylenglycol, 1,3-Propandiol, Glycerin, Glucose, Saccharose, Essigsäure, Butansäure, 1,2-Benzoldicarbonsäure, Ammoniak, Dimethylamin und Diethylamin.

Die Telomerisation wird bevorzugt in Anwesenheit eines Lösungsmittels durchgeführt.

Als Lösemittel findet im allgemeinen das eingesetzte Nucleophil Verwendung, wenn es bei Reaktionsbedingungen als Flüssigkeit vorliegt. Es können jedoch auch andere Lösemittel eingesetzt werden. Die eingesetzten Lösemittel sollten dabei weitgehend inert sein. Bevorzugt wird der Zusatz von Lösemitteln bei Einsatz von Nucleophilen, die unter Reaktionsbedingungen als Feststoffe vorliegen oder bei Produkten, die unter den Reaktionsbedingungen als Feststoffe anfallen würden. Geeignete Lösemittel sind unter anderem aliphatische, cycloaliphatische und aromatische Kohlenwasserstoffe wie zum Beispiel C₃-C₂₀-Alkane, Mischungen niederer Alkane (C₃-C₂₀), Cyclohexan, Cyclooctan, Ethylcyclohexan, Alkene und Polyene, Vinylcyclohexen, 1,3,7-Octatrien, die C₄₋Kohlenwasserstoffe aus Crack-C₄-Schnitten, Benzol, Toluol und Xylol; polare Lösemittel wie zum Beispiel tertiäre und sekundäre Alkohole, Amide wie zum Beispiel Acetamid, Dimethylacetamid und Dimethylformamid, Nitrile wie zum Beispiel Acetonitril und Benzonitril, Ketone wie zum Beispiel Aceton, Methylisobutylketon und Diethylketon; Carbonssäureester wie zum Beispiel Essigsäureethylester, Ether wie beispielsweise Dipropylether, MTBE, Diethylether, Dimethylether, Methyloctylether, 3-Methoxyoctan, Dioxan, Tetrahydrofuran, Anisol, Alkyl- und Arylether von Ethylenglycol, Diethylenglycol und Polyethylenglycol und andere polare Lösemittel wie zum Beispiel Sulfolan, Dimethylsulfoxid, Ethylencarbonat, Propylencarbonat und Wasser. Auch Ionische Flüssigkeiten, beispielsweise Imidazolium-oder Pyridiniumsalze, können als Lösemittel eingesetzt werden.
Die Lösemittel kommen allein oder als Mischungen verschiedener Lösemittel bzw. Nucleophile zum Einsatz.

Die Temperatur, bei der die Telomerisationsreaktion ausgeführt wird, liegt bevorzugt zwischen 10 und 180 °C, insbesondere zwischen 30 und 120 °C, besonders bevorzugt zwischen 40 und 100 °C. Der Reaktionsdruck beträgt 1 bis 125 bar, bevorzugt 1 bis 64 bar, besonders bevorzugt 1 bis 26 bar.

In der Telomerisation bevorzugt eingesetzte Metallverbindungen (II) sind Salze oder Komplexverbindungen des Palladiums, beispielsweise Palladium(II)acetat, Palladium(II)chlorid, Palladium(II)bromid, Lithiumtetrachloropalladat, Palladium(II)acetylacetonat, Palladium(0)-dibenzylidenaceton-Komplexe, Palladium(II)propionat, Palladium(II)chloridbisacetonitril, Palladium(II)-bistriphenylphosphandichlorid, Palladium(II)chloridbisbenzonitril, Bis(tri-o-tolylphosphin)palladium(0).

Die Konzentration des Katalysators in der Telomerisationsreaktion, formal angegeben in ppm (Masse) an Katalysatormetall bezogen auf die Gesamtmasse, beträgt 0.01 ppm bis 1000 ppm, bevorzugt 0.5 bis 100 ppm, besonders bevorzugt 1 bis 50 ppm.

Wird der Katalysator für die Telomerisation in situ aus einer Metallverbindung und einem Ligandprecursor der allgemeinen Formeln **(II)** bis **(X)** dargestellt, wird der Ligandprecursor bevorzugt in einem Verhältnis [Mol/Mol] von Ligandprecursor zu Metall von 100 : 1 bis 1 : 1, besonders bevorzugt 10 : 1 bis 1 : 1 eingesetzt.

Zusätzlicher Ligandprecursor kann zu jedem Zeitpunkt der Reaktion in den Prozess eingebracht werden. Weitere Liganden, beispielsweise Phosphorliganden wie Triphenylphosphin, können ebenfalls in der Reaktionsmischung vorliegen.

Aufgrund der Katalysatoraktivitäten und -stabilitäten ist es bei der Telomerisation möglich, extrem kleine Mengen an Katalysator zu verwenden. Neben einer Verfahrensführung, bei der der Katalysator wiederverwendet wird, wird so auch die Option eröffnet, den Katalysator nicht zu recyceln. Beide Varianten sind in der Patentliteratur bereits beschrieben (WO 90/13531, US 5254782, US 4642392).

Oftmals ist es vorteilhaft, die Telomerisationsreaktion in Gegenwart von Basen durchzuführen. Bevorzugt werden basische Komponenten mit einem pK_{b}-Wert kleiner 7, insbesondere Verbindungen ausgewählt aus der Gruppe Amine, Alkalimetallsalze, Erdalkalimetallsalze, Alkoholate und Phenolate eingesetzt.

Als basische Komponente sind beispielsweise geeignet Amine wie Trialkylamine, die alicyclisch oder/und offenkettig sein können, Amide, Alkali- oder/und Erdalkalisalze aliphatischer oder/und aromatischer Carbonsäuren, wie Acetate, Propionate, Benzoate bzw. entsprechende Carbonate, Hydrogencarbonate, Alkoholate von Alkali- und/oder Erdalkalielementen, Phosphate, Hydrogenphosphate oder/und Hydroxide bevorzugt von Lithium, Natrium, Kalium, Calcium, Magnesium, Cäsium, Ammonium- und Phosphoniumverbindungen. Bevorzugt sind als Zusatz Hydroxide, Alkoholate und Phenolate der Alkali- und Erdalkalielemente.

Im Allgemeinen wird die basische Komponente zwischen 0.01 mol% und 10 mol% (bezogen auf das Olefin), bevorzugt zwischen 0.1 mol% und 5 mol% und ganz besonders bevorzugt zwischen 0.2 mol% und 1 mol% in der Telomerisationsreaktion eingesetzt. Das Verhältnis [Mol/Mol] zwischen eingesetztem Dien und Nucleophil beträgt 1:100 bis 100:1, bevorzugt 1:50 bis 10:1, besonders bevorzugt 1:10 bis 2:1.

Das Verfahren zur Telomerisation unter Einsatz der erfindungsgemäß hergestellten Komplexe als Katalysatoren oder Katalysatorprecursoren kann kontinuierlich oder diskontinuierlich betrieben werden und ist nicht auf den Einsatz bestimmter Reaktortypen begrenzt. Beispiele für Reaktoren, in denen die Reaktion durchgeführt werden kann, sind Rührkesselreaktor, Rührkesselkaskade, Strömungsrohr und Schlaufenreaktor. Auch Kombinationen verschiedener Reaktoren sind möglich, beispielsweise ein Rührkesselreaktor mit nachgeschaltetem Strömungsrohr.

Als Katalysatoren für Metathesereaktionen finden oftmals Komplexe des Osmiums und insbesondere des Rutheniums Anwendung. Aus prinzipiell bekannten Komplexen mit Phosphinliganden konnten in letzter Zeit durch Einführung von heterocyclischen Carbenliganden neue Katalysatoren mit verbesserten Eigenschaften erhalten werden. Neben dem Einsatz von Metallkomplexen definierter Struktur werden inzwischen auch Methoden zur in situ Darstellung von metatheseaktiven Katalysatoren beschrieben (WO 0058322, DE 19815275, EP 1022282, WO 0071554, WO 0220535).

Nach dem erfindungsgemäßen Verfahren können metatheseaktive Metallkomplexe durch Umsetzung von Metallverbindungen mit Ligandprecursom nach den allgemeinen Formeln (**II**) bis (**X**) erhalten werden. Die Katalysatoren sind für ROMP (ring-opening metathesis polymerisation), RCM (ring-closing metathesis) und ADMET (acyclic diene metathesis) geeignet. Als Metallverbindungen werden dabei bevorzugt Verbindungen des Rutheniums eingesetzt.

## Patentansprüche

1. Verfahren zur Herstellung von Komplexen von Metallen der 6. bis 10. Gruppe des Periodensystems der Elemente durch Umsetzen einer Verbindung eines Metalls der 6. bis 10. Gruppe des Periodensystems der Elemente mit Verbindungen der Formel II und/oder III 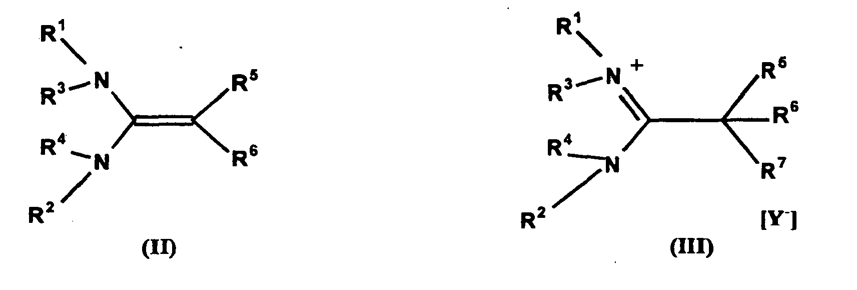 wobei
R¹, R², R³, R⁴ gleich oder verschieden, für lineare, verzweigte, substituierte oder unsubstituierte cyclische oder alicyclische Alkylgruppen mit 1 bis 24 Kohlenstoffatomen; substituierte oder unsubstituierte, mono- oder polycyclische Arylgruppen mit 6 bis 24 Kohlenstoffatomen; mono- oder polycyclische, substituierte oder unsubstituierte Heterocyclen mit 2 bis 24 Kohlenstoffatomen; ein Heteroatom aus der Gruppe N, O, S stehen und R³, R⁴ eine kovalente Bindung aufweisen können R⁵, R⁶, R⁷ gleich oder verschieden für H, lineare, verzweigte, substituierte oder unsubstituierte cyclische oder alicyclische Alkylgruppen mit 1 bis 24 Kohlenstoffatomen; substituierte oder unsubstituierte, mono- oder polycyclische Arylgruppen mit 6 bis 24 Kohlenstoffatomen stehen können, mit der Maßgabe, dass der Substituent R⁷ nicht für H steht.

2. Verfahren nach Anspruch 1,
**dadurch gekennzeichnet,**
**dass** als Verbindungen der Formeln II oder III Verbindungen der allgemeinen Formeln V bis X 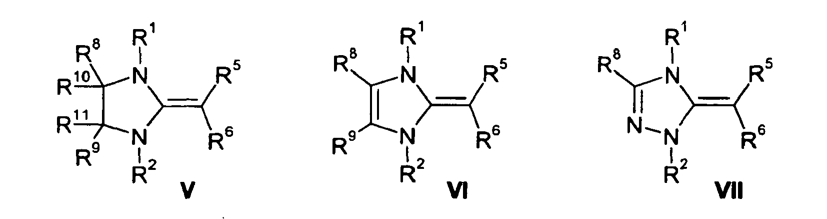 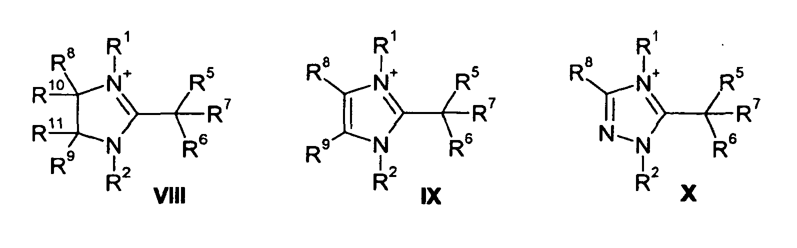 eingesetzt werden, wobei
R¹, R², R⁵, R⁶, R⁷ die genannten Bedeutungen und
R⁸, R⁹, R¹⁰, R¹¹ gleich oder verschieden für H stehen oder eine der Bedeutungen von R¹ besitzen.

3. Verfahren nach Anspruch 1 oder 2,
**dadurch gekennzeichnet**,
das Komplexe der allgemeinen Formel I 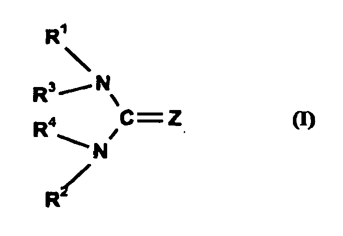 hergestellt werden, wobei [Z] für ein Metallkomplexfragment der allgemeinen Formel
[LₐM_{b}] [A]ₙ (XI)
steht, und
M: Metalle der Gruppen 6 bis 10 des Periodensystems der Elemente
L: ein oder mehrere, gleiche oder verschiedene ein oder mehrzähnige geladene oder ungeladene Liganden
A: einfach geladenes Anion oder das chemische Äquivalent eines mehrfach geladenen Anions,
b: ganze Zahl von 1 bis 3
a: ganze Zahl von 0 bis 5 x b
n: ganze Zahl von 0 bis 6
bedeutet und R¹, R², R³, R⁴ die genannten Bedeutungen besitzt.

4. Verfahren nach Anspruch 3,
**dadurch gekennzeichnet,**
**dass** L in der allgemeinen Formel (**XI**) für Wasserstoff, das Wasserstoff-Ion, Halogene, Halogen-Ionen, Pseudohalogenide, Carboxylat-Ionen, Sulfonat-Ionen, Amidreste, Alkylgruppen, Alkylarylgruppen, Arylgruppen, Heteroarylgruppen, Alkenylgruppen, Alkoholatreste, Nitrile, Isonitrile, Mono- oder Diolefine, Alkine, π-Aromatenreste, Cyclopentadienyl, Indenyl, Phosphine, Phosphite, Phosphinite, Phosphonite, Phosphoraromaten, Acetylacetonat, Kohlenmonoxid, Stickstoffmonoxid oder Carbenliganden steht,
wobei die Alkylgruppen 1 bis 24, die Alkenyl- und Heteroarylgruppen 2 bis 24 und die Aryl- und Alkylarylgruppen 5 bis 24 Kohlenstoffatome beinhalten und jeweils substituiert oder unsubstituiert sein können.

5. Verfahren nach Anspruch 3,
**dadurch gekennzeichnet,**
**dass** A in der allgemeinen Formel (XI) für Halogenid, Pseudohalogenid, Tetraphenylborat, Tetrafluoroborat, Tetrachloroborat, Hexafluorophosphat, Hexafluoroantimonat, Tetracarbonylcobaltat, Hexafluoroferrat, Tetrachloroferrat, Tetrachloroaluminat, Triflat, Bistrifluorsulphonylamid, Heptachlorodialuminat, Tetrachloropalladat, Sulfat, Hydrogensulfat, Nitrat, Nitrit, Phosphat, Hydrogenphosphat, Dihydrogenphosphat, Hydroxid, Carbonat, Hydrogencarbonat, Salze von aromatischen oder aliphatischen Carbonsäuren, Salze von aromarischen oder aliphatischen Sulfonsäuren oder Phenolate steht.

6. Verfahren nach Anspruch 1 bis 5,
**dadurch gekennzeichnet,**
**dass** als Metall der Gruppen 6 bis 10 des Periodensystems Ru, Rh, Ni, Pd oder Pt eingesetzt wird.

7. Verfahren nach einem der Ansprüche 1 bis 6,
**dadurch gekennzeichnet,**
**dass** die Metallkomplexe (I) aus den Verbindungen II bis X und einem Metall der Gruppen 6 bis 10 des Periodensystems in situ als Katalysatoren oder Katalysatorprecursoren in Hydroformylierungen, Hydrierungen, Arylaminierungen, Hydrosilylierungen, Heck-Reaktionen, Suzuki-Kupplungen, Kumada-Kupplungen, Stille-Kupplungen, Miyaura-Kupplungen, Sonogashira-Kupplungen, Olefinmetathesen, Cyclopropanierungen, Reduktionen von Halogenarenen, Polymerisationen oder Telomerisationsreaktionen hergestellt werden.

8. Verfahren nach einem der Ansprüche 1 bis 7,
**dadurch gekennzeichnet,**
**dass** eine oder mehrere der Verbindungen II bis X in einem Verhältnis von 1 bis 100 Mol zum Metall der 6. bis 10. Gruppe des Periodensystems eingesetzt werden.

9. Verwendung der Verbindungen II und/oder III als Ligandprecursoren zur in situ Herstellung von Metallkomplexen I als Katalysatoren in Hydroformylierungen, Hydrierungen, Arylaminierungen, Hydrosilylierungen, Heck-Reaktionen, Suzuki-Kupplungen, Kumada-Kupplungen, Stille-Kupplungen, Miyaura-Kupplungen, Sonogashira-Kupplungen, Olefinmetathesen, Cyclopropanierungen, Reduktionen von Halogenarenen, Polymerisationen oder Telomerisationsreaktionen.

## Claims

1. A process for preparing complexes of metals of groups 6 to 10 of the Periodic Table of the Elements by reacting a compound of a metal of groups 6 to 10 of the Periodic Table of the Elements with compounds of the formula. II and/or III 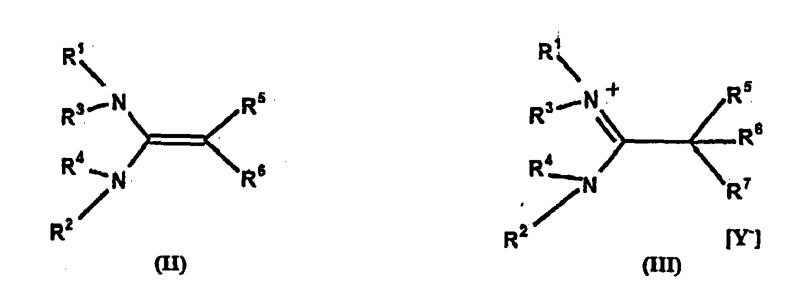 where
R¹, R², R³, R⁴ are the same or different and are each linear, branched, substituted or unsubstituted, cyclic or alicyclic alkyl groups having from 1 to 24 carbon atoms; substituted or unsubstituted, mono- or polycyclic aryl groups having from 6 to 24 carbon atoms; mono- or polycyclic, substituted or unsubstituted heterocycles having from 2 to 24 carbon atoms; a heteroatom from the group of N, O, S, and R³, R⁴ may have a covalent bond R⁵, R⁶, R⁷ may be the same or different and may each be H, linear, branched, substituted or unsubstituted, cyclic or alicyclic alkyl groups having from 1 to 24 carbon atoms; substituted or unsubstituted, mono- or polycyclic aryl groups having from 6 to 24 carbon atoms, with the proviso that the R⁷ substituent is not H.

2. A process according to claim 1,
**characterized in that**
the compounds of the formulae II or III used are compounds of the general formulae V to X 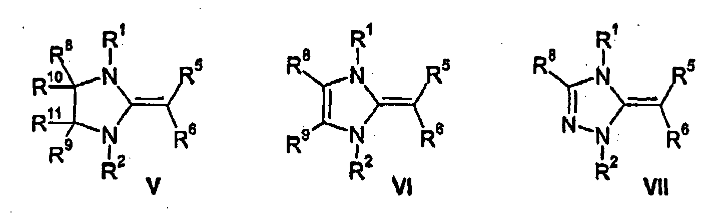 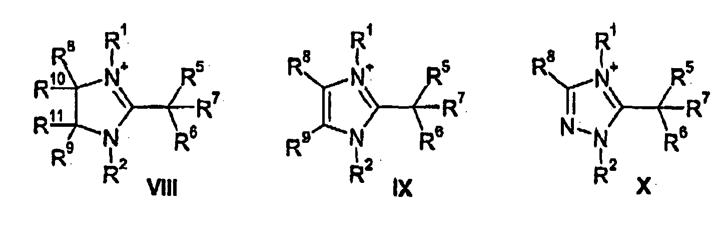 where
R¹, R², R⁵, R⁶, R⁷ are each as defined above and
R⁸, R⁹, R¹⁰, R¹¹ are the same or different and are each H or have one of the definitions of R¹.

3. A process according to claim 1 or 2,
**characterized in that**
complexes of the general formula I 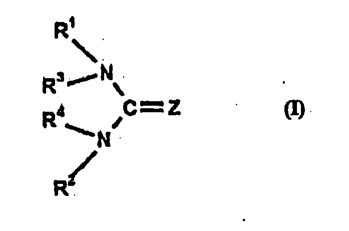 are prepared where [Z] is a metal complex fragment of the general formula
[LₐM_{b}][A]ₙ (XI)
and
M is: metals of groups 6 to 10 of the Periodic Table of the Elements
L is: one or more identical or different mono- or polydentate, charged or uncharged ligands
A is: a singly charged anion or the chemical equivalent of a multiply charged anion,
b is: an integer of from 1 to 3
a is: an integer of from 0 to 5 x b
n is: an integer from 0 to 6
and R¹, R², R³, R⁴ are each defined as specified.

4. A process according to claim 3;
**characterized in that**
L in the general formula (**XI**) is hydrogen, the hydrogen ion, halogens, halogen ions, pseudohalides, carboxylate ions, sulfonate ions, amide radicals, alkyl groups, alkylaryl groups, aryl groups, heteroaryl groups, alkenyl groups, alkoxide radicals, nitriles, isonitriles, mono- or diolefins, alkynes, π-aromatic radicals, cyclopentadienyl, indenyl, phosphines, phosphites, phosphinites, phosphonites, phosphorus aromatics, acetylacetonate, carbon monoxide, nitrogen monoxide or carbene ligands,
where the alkyl groups contain from 1 to 24, the alkenyl and heteroaryl groups from 2 to 24, and the aryl and alkylaryl groups from 5 to 24, carbon atoms, and may each be substituted or unsubstituted.

5. A process according to claim 3,
**characterized in that**
A in the general formula (**XI**) is halide, pseudohalide, tetraphenylborate, tetrafluoroborate, tetrachloroborate, hexafluorophosphate, hexafluoroantimonate, tetracarbonylcobaltate, hexafluoroferrate, tetrachloroferrate, tetrachloroaluminate, triflate, bistrifluorosulfonylamide, heptachlorodialuminate, tetrachloropalladate, sulfate, hydrogensulfate, nitrate, nitrite, phosphate, hydrogenphosphate, dihydrogenphosphate, hydroxide, carbonate, hydrogencarbonate, salts of aromatic or aliphatic carboxylic acids, salts of aromatic or aliphatic sulfonic acids or phenoxides.

6. A process according to any of claims 1 to 5,
**characterized in that**
the metal of groups 6 to 10 of the Periodic Table which is used is Ru; Rh, Ni, Pd or Pt.

7. A process according to any one of claims 1 to 6,
**characterized in that**
the metal complexes (I) are prepared from the compounds II to X and a metal of groups 6 to 10 of the Periodic Table in situ as catalysts or catalyst precursors in hydroformylations, hydrogenations, aryl aminations, hydrosilylations; Heck reactions, Suzuki couplings, Kumada couplings, Stille couplings, Miyaura couplings, Sonogashira couplings, olefin metatheses, cyclopropanations, reduction of haloarenes, polymerizations or telomerization reactions.

8. A process according to any one of claims 1 to 7,
**characterized in that**
one or more of the compounds II to X is used in a ratio of from 1 to 100 mol to the metal of groups 6 to 10 of the Periodic Table.

9. The use of the compounds II and/or III as ligand precursors for the in situ
preparation of metal complexes I in hydroformylations, hydrogenations, aryl aminations, hydrosilylations, Heck reactions, Suzuki couplings, Kumada couplings, Stille couplings, Miyaura couplings, Sonogashira couplings, olefin metatheses, cyclopropanations, reduction of haloarenes, polymerizations or telomerization reactions.

## Revendications

1. Procédé de fabrication de complexes métalliques du 6^{ème} au 10^{ème} groupe de la Classification périodique des éléments par conversion d'un composé d'un métal du 6^{ème} au 10^{ème} groupe de la Classification périodique des éléments avec des composés de formule II et/ou III 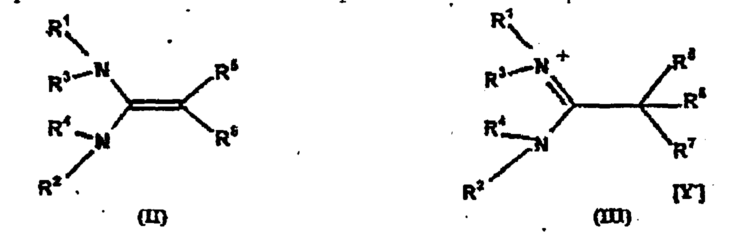 dans laquelle R¹, R², R³, R⁴ sont identiques ou différents et représentent des groupes alkyle cycliques ou alicycliques linéaires, ramifiés, substitués ou non substitués, comportant 1 à 24 atomes de carbone ; des groupes aryle mono ou polycycliques substitués ou non substitués comportant 6 à 24 atomes de carbone ; des hétérocycles mono ou polycycliques substitués ou non substitués comportant 2 à 24 atomes de carbone ; un hétéroatome du groupe N, O, S et R³, R⁴ peuvent présenter une liaison covalente,
R⁵, R⁶, R⁷ sont identiques ou différents, représentent H, des groupes alkyle cycliques ou alicycliques linéaires, ramifiés, substitués ou non substitués, comportant 1 à 24 atomes de carbone; des groupes aryle mono ou polycycliques substitués ou non substitués comportant 6 à 24 atomes de carbone, étant précisé que le substituant R⁷ ne représente pas H.

2. Procédé selon la revendication 1,
**caractérisé en ce qu'**
on utilise, comme composés des formules II ou III, des composés des formules générales V à X 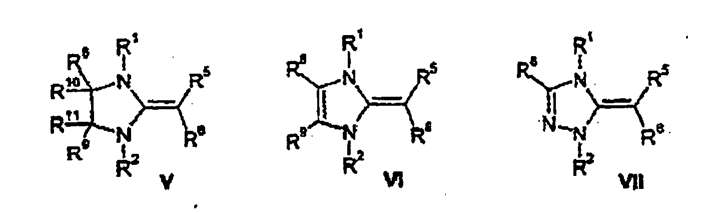 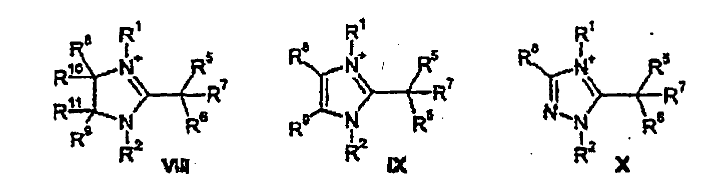 dans lesquelles
R¹, R², R⁵, R⁶, R⁷ ont les significations indiquées et
R⁸, R⁹, R¹⁰, R¹¹ sont identiques ou différents et représentent H ou ont l'une des significations de R¹.

3. Procédé selon la revendication 1 ou 2,
**caractérisé en ce qu'**
on fabrique le complexe de formule générale I 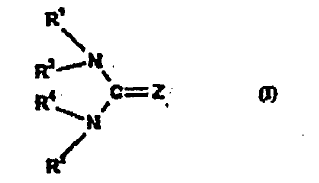 dans laquelle [Z] représente un fragment de complexe métallique de formule générale
[LₐM_{b}][A]ₙ (XI)
et
M : des métaux des groupes 6 à 10 de la Classification périodique des éléments,
L : un ou plusieurs ligands identiques ou différents, mono ou polydentés, chargés ou non chargés,
A: un anion à charge simple ou l'équivalent chimique d'un anion à charge multiple,
b : un nombre entier de 1 à 3,
a : un nombre entier de 0 à 5 x b
n : un nombre entier de 0 à 6
et R¹, R² R³, R⁴ ont les significations indiquées.

4. Procédé selon la revendication 3,
**caractérisé en ce que**
L, dans la formule générale (XI) représente de l'hydrogène, l'ion d'hydrogène, des halogènes, des ions d'halogène, des pseudohalogénures, des ions de carboxylate, des ions de sulfonate, des radicaux amide, des groupes alkyle, des groupes alkylaryle, des groupes aryle, des groupes hétéroaryle, des groupes alcényle, des radicaux alcoolate, des nitriles, des isonitriles, des mono ou dioléfines, des alkines, des radicaux π-aromatiques, du cyclopentadiényle, de l'indényle, des phosphines, des phosphites, des phosphinites, des phosphonites, des aromatiques phosphorés, de l'acétonate d'acétyle, du monoxyde de carbone; du monoxyde d'azote ou des ligands de carbène,
les groupes alkyle contenant 1 à 24, les groupes alcényle et hétéroaryle 2 à 24 et les groupes aryle et alkylaryle 5 à 24 atomes de carbone et pouvant être respectivement substitués ou non substitués.

5. Procédé selon la revendication 3,
**caractérisé en ce que**
A, dans la formule générale (XI) représente un halogénure, un pseudo-halogénure, un borate de tétraphényle, un tétrafluoroborate, le tétra-chloroborate, l'hexafluorophosphate, l'hexafluoroantimonate, le cobaltate de tétracarbonyle, l'hexafluoroferrate, le tétrachloroferrate, le tétrachloroaluminate, le triflate, l'amide de bistrifluorosulphonyle, l'heptachlorodialuminate, le tétrachloropalladate, un sulfate, un sulfate d'hydrogène, un nitrate, un nitrite, un phosphate, l'hydrogénophosphate, le dihydrogénophosphate, un hydroxyde, un carbonate, l'hydrogénocarbonate, des sels d'acides carboxyliques aromatiques ou aliphatiques, des sels d'acides sulfoniques aromatiques ou aliphatiques ou des phénolates.

6. Procédé selon la revendication 1 à 5,
**caractérisé en ce qu'**
on utilise comme métal des groupes 6 à 10 de la Classification périodique, du Ru, Rh, Ni, Pd ou Pt.

7. Procédé selon l'une quelconque des revendications 1 à 6,
**caractérisé en ce qu'**
on fabrique les complexes métalliques (I) constitués des composés II à X et d'un métal des groupes 6 à 10 de la Classification périodique in situ en tant que catalyseurs ou précurseurs de catalyseurs dans des hydroformylations, des hydrogénations, des arylaminations, des hydrosilylations, des réactions de Heck; des couplages de Suzuki, des couplages de Kumada, des couplages de Stille, des couplages de Miyaura, des couplages de Sonogashira, des métathèses d'oléfine, des cyclopropanations, des réductions des arènes halogénés, des polymérisations ou des réactions de télomérisation.

8. Procédé selon l'une quelconque des revendications 1 à 7,
**caractérisé en ce qu'**
on utilise un ou plusieurs des composés II à X dans un rapport de 1 à 100 moles par rapport au métal du 6^{ème} au 10^{ème} groupe de la Classification périodique.

9. Utilisation des composés II et/ou III en tant que précurseurs de ligands pour fabriquer in situ des complexes métalliques 1 en tant que catalyseurs dans des hydroformylations, des hydrogénations, des arylaminations, hydrosilylations, des réactions de Heck, des couplages de Suzuki, des couplages de Kumada, des couplages de Stille, des couplages de Miyaura, des couplages de Sonogashira, des métathèses d'oléfine, des cyclopropanations, des réductions des arènes halogénés, des polymérisations ou des réactions de télomérisation.
